# EUROPÄISCHE PATENTANMELDUNG

(11) **EP 1 669 892 A1**
(43) Veröffentlichungstag der Anmeldung: **14.06.2006**
(21) Anmeldenummer: 05025366.5
(22) Anmeldetag: 21.11.2005
(51) Int. Cl.: G06F 17/30

(54) **Verfahren und grafische Benutzerschnittstelle zum modifizieren eines Dokuments**

(30) Priorität: 09.12.2004 DE 102004059426
(71) Anmelder: BRAND AD GMBH, 90762 Fuerth (DE)
(72) Erfinder: Simon, Ansgar, 97080 Würzburg (DE); Isselhard, Jochen, 90765 Fürth (DE); Teichmann, Bodo, 90763 Fürth (DE)
(74) Vertreter: Schoppe, Fritz

(57) **Zusammenfassung**

Zur Modifizierung eines Dokuments, welches durch einen Server basierend auf Daten aufgebaut wird, die über ein HTML-Formular an den Server übertragen werden, wird ein Verfahren und eine grafische Benutzerschnittstelle vorgeschlagen, wobei hier zunächst eine Vorschau des Dokuments sowie die den entsprechenden Datenbereichen des Dokuments zugeordneten HTML-Formularelemente bereitgestellt werden. Ein HTML-Formularelement oder ein Datenbereich wird ausgewählt, wobei ansprechend auf das Auswählen der entsprechende Datenbereich in dem Dokument in dem Vorschaubereich hervorgehoben werden. Anschließend erfolgt eine Modifizierung der Daten in dem dem Datenbereich zugeordneten HTML-Formularelement, mit anschließender Aktualisierung.

## Beschreibung

Die vorliegende Erfindung bezieht sich auf ein Verfahren und auf eine grafische Benutzerschnittstelle zum Modifizieren eines Dokuments, insbesondere zum Modifizieren eines Dokuments, das durch einen Server basierend auf Daten aufgebaut wird, die über ein HTML-Formular mit einem oder mehreren HTML-Formularelementen von einem Benutzer an den Server übertragen werden.

Dokumente, die auf einem Server gespeichert sind und über Web-Browser Benutzern zugänglich gemacht werden, haben einen relativ komplexen grafischen Aufbau, bestehend aus Text, Bildern und anderen Elementen sowie verschiedenen Schriften, verschiedenen Ausrichtungen und Platzierungen der einzelnen Elemente etc. Diese Dokumente werden dadurch erzeugt, dass ein Inhaber des Dokuments die entsprechenden Elemente definiert, indem er die entsprechenden Daten für die erwünschten Elemente festgelegt bzw. definiert. Anschließend werden die Daten zur Erzeugung des Dokuments auf dem Server an den Server weiter geleitet, der basierend auf den empfangenen Daten das erwünschte Dokument erzeugt und zum Download durch andere Benutzer bereitstellt.

Zwar existieren Dokumente, die nach deren Erstellung keinerlei Änderung erfahren, jedoch stellt dies nicht die Regel dar. Tatsächlich ist es oftmals erwünscht, das erstellte Dokument zu aktualisieren, beispielsweise durch Aktualisieren einzelner Textbereiche oder Bildbereiche, ohne das gesamte Dokument erneut zu erstellen. Dies wird gemäß dem Stand der Technik dadurch erreicht, dass es einem Benutzer ermöglicht wird, Dokumente der oben beschriebenen Art, nämlich Dokumente mit komplexem grafischen Aufbau, nämlich verschiedenen Schriften, verschiedenen Ausrichtungen und Platzierungen von Text, Bildern und ähnlichem, mit Hilfe einer einfachen HTML-Seite zu verändern. Hierzu wird ein HTML-Formular verwendet. Das HTML-Formular umfasst ein oder mehrere HTML-Formularelemente, z.B. ein Textfeld, einen Radiobutton, eine Checkbox oder eine Combobox, um Text zu e-ditieren, oder um z. B. aus mehreren möglichen Bildern als Hintergrund ein erwünschtes Bild auszuwählen, oder auch um das komplette Layout der Texte umzuschalten.

Neben dem HTML-Formular wird üblicherweise eine Vorschau des existierenden fertigen Dokuments bereitgestellt, so dass der Benutzer eine Vorstellung vom Ergebnis seiner Änderungen bekommt. So bald er in dem HTML-Formular seine Änderungen durchgeführt hat, kann er diese mit einem "Aktualisieren"-Button bestätigen, woraufhin die von ihm eingegebenen Daten an den Server geschickt werden, der wiederum die Daten in das existierende Dokument einbaut und anschließend in dem Browser des Benutzers eine neue Vorschau mit den geänderten Daten erzeugt, um dem Benutzer eine Kontrolle der durchgeführten Änderungen zu ermöglichen.

Ein Nachteil dieser Vorgehensweise besteht, insbesondere bei komplexen Dokumenten, darin, dass hier eine Vielzahl von HTML-Formularelementen vorgesehen sind, um verschiedene Datenbereiche des existierenden Dokuments zu modifizieren, beispielsweise verschiedene Bildbereiche, Textbereiche oder andere Bereiche. Je komplexer das Dokument ist, desto schwieriger ist es für einen Benutzer festzustellen, welches der HTML-Formularelemente einem bestimmten Datenbereich in dem Dokument der Vorschau zugeordnet ist, er also nicht ohne weiteres erkennen kann, welches HTML-Formularelement welchem Bereich in der Vorschau des Dokuments entspricht. Dies führt dazu, dass gegebenenfalls Änderungen durchgeführt werden, die für bestimmte Bereiche gar nicht vorgesehen waren, wohingegen andere Bereiche, die die Änderung hätten erfahren sollen, unverändert bleiben.

Dem Benutzer wird dies erst dann bewusst, wenn alle Änderungen aktualisiert wurden, die Daten also an den Server weiter geschickt wurden und die aktualisierte Version des Dokuments in der Vorschau angezeigt wird. Zu diesem Zeitpunkt sind jedoch bereits die ursprünglichen Daten, die fehlerhaft verändert wurden, überschrieben oder gelöscht, so dass es recht aufwendig ist, die so fehlerhaft erzeugte Dokumentenseite zu korrigieren.

Ausgehend von diesem Stand der Technik liegt der vorliegenden Erfindung die Aufgabe zugrunde, ein verbessertes Verfahren und eine verbesserte grafische Benutzerschnittstelle zu schaffen, die es einem Benutzer ermöglichen, zielgenau Modifikationen in erwünschten Bereichen eines angezeigten Dokuments durchzuführen.

Diese Aufgabe wird durch ein Verfahren nach Anspruch 1 sowie durch ein Verfahren nach Anspruch 11 gelöst.

Die vorliegende Erfindung schafft ein Verfahren zum Modifizieren eines Dokuments, das durch einen Server basierend auf Daten aufgebaut wird, die von einem Benutzer an den Server übertragen werden, mit folgenden Schritten:
Bereitstellen einer Vorschau des Dokuments in einem Vorschaubereich einer grafischen Benutzerschnittstelle;
Bereitstellen eines HTML-Formulars mit einer Mehrzahl von HTML-Formularelementen in einem Formularbereich der grafischen Benutzerschnittstelle, wobei jedes HTML-Formularelement Daten enthält, die einem vorbestimmten Bereich des Dokuments zugeordnet sind;
Auswählen eines HTML-Formularelements oder eines Datenbereichs in dem Dokument in dem Vorschaubereich;
ansprechend auf das Auswählen des HTML-Formularelements bzw. des Datenbereichs, Hervorheben des dem HTML-Formularelement zugeordneten Datenbereichs des Dokuments in dem Vorschaubereich bzw. des dem Datenbereich des Dokuments in dem Vorschaubereich (124) zugeordneten HTML-Formularelements; und
Modifizieren der Daten in dem dem Datenbereich zugeordneten HTML-Formularelement.

Gemäß einem bevorzugten Ausführungsbeispiel der vorliegenden Erfindung umfasst das erfindungsgemäße Verfahren ferner das Bestätigen der durchgeführten Modifizierung der Daten, das Übertragen der Daten aus dem HTML-Formular an den Server, um das Dokument basierend auf den modifizierten Daten aufzubauen, um ein aktualisiertes Dokument zu erhalten, und das Erzeugen einer Vorschau des aktualisierten Dokuments in dem Vorschaubereich.

Die vorliegende Erfindung schafft ferner eine grafische Computerschnittstelle zum Modifizieren eines Dokuments, das durch einen Server basierend auf Daten aufgebaut wird, die von einem Benutzer an den Server übertragen werden, mit folgenden Merkmalen:
einem Vorschaubereich, in dem basierend auf den Daten betreffend das Dokument von dem Server eine Vorschau des Dokuments vorliegt;
einem Formularbereich, der ein HTML-Formular mit einer Mehrzahl von HTML-Formularelementen aufweist, wobei jedes HTML-Formularelement Daten enthält, die einem Bereich des Dokuments in dem Vorschaubereich zugeordnet sind, wobei die in dem HTML-Formularelement enthaltenen Daten durch einen Benutzer geändert werden können;
einer Steuerungseinrichtung, die wirksam ist, um beim Auswählen eines HTML-Formularelements oder eines Datenbereichs in dem Dokument in dem Vorschaubereich den zugeordneten Datenbereich in dem Vorschaubereich oder das zugeordnete HTML-Formularelement hervorzuheben; und
einem Bestätigungsbereich, dessen Betätigung bewirkt, dass die Steuerungseinrichtung die Daten aus der HTML-Formular an den Server überträgt und ein aktualisiertes Dokument von dem Server empfängt, um in dem Vorschaubereich eine aktualisierte Vorschau des aktualisierten Dokuments zu erzeugen.

Gemäß einem bevorzugten Ausführungsbeispiel der vorliegenden Erfindung umfasst das Hervorheben des zugeordneten Datenbereichs die Erzeugung eines Rahmens um denselben bzw. das Ändern einer Hintergrundfarbe eines Eingabebereichs bzw. Dateneingabefelds des zugeordneten HTML-Formularelements. In diesem Zusammenhang kann gleichzeitig eine Eingabemarkierung in dem zugeordneten HTML-Formularelement erzeugt werden, z. B. durch Platzieren eines Eingabe-Cursors in dem entsprechenden Dateneingabefeld des HTML-Formulars.

Gemäß einem weiteren bevorzugten Ausführungsbeispiel der vorliegenden Erfindung wird auf das Auswählen des Datenbereichs bzw. des HTML-Formularelements hin ein Eingabefeld erzeugt, welches dem Datenbereich des Dokuments in dem Vorschaubereich überlagert ist. In diesem Zusammenhang wird vorteilhafter Weise ferner eine Eingabemarkierung in dem Eingabefeld platziert, wobei vorzugsweise die in das Eingabefeld eingegebenen Daten in das entsprechende Datenfeld des zugeordneten HTML-Formularelements nach Abschluss der Eingabe übertragen werden, wodurch die Daten in dem HTML-Formularelement entsprechend modifiziert werden.

Gemäß einem weiteren Aspekt schafft die vorliegende Erfindung ein Computer-Programm-Produkt mit einem auf maschinenlesbarem Träger gespeicherten Programmcode zur Durchführung des erfindungsgemäßen Verfahrens, wenn das Programm-Produkt auf einem Rechner abläuft. Gemäß einem weiteren Aspekt schafft die vorliegende Erfindung ein Computer-Programm mit einem Programmcode zur Durchführung des erfindungsgemäßen Verfahrens, wenn das Programm auf einem Computer abläuft. Gemäß wiederum einem weiteren Aspekt schafft die vorliegende Erfindung ein digitales Speichermedium, z. B. eine Diskette, eine CD-ROM, eine DVD, etc., mit elektronisch auslesbaren Steuersignalen, die so mit einem programmierbaren Computersystem zusammen wirken können, dass das erfindungsgemäße Verfahren ausgeführt wird.

Gemäß dem bevorzugten Ausführungsbeispiel sieht die erfindungsgemäße Lösung vor, zusätzlich auf der Seite des Web-Browsers, welche das HTML-Formular und die Vorschau umfasst, noch eine vorzugsweise im JavaScript geschriebene Funktionalität einzubauen, die ebenfalls auf dem Browser des Benutzers abläuft. Diese zusätzliche Funktionalität bewirkt erfindungsgemäß für alle HTML-Formularelemente, die eine direkte Entsprechung in dem Dokument haben, in der Regel vor allem für Texteingabefelder, Folgendes:
1. Wählt der Benutzer ein Texteingabefeld aus, z. B. durch Platzieren des Mauszeigers über demselben und Klicken der Maus oder auf andere Weise, so dass dieses den Fokus hat, wird in der Dokumentenvorschau der dem Texteingabefeld entsprechende Bereich in dem Formular markiert, z. B. mit einem farbigen Rechteck.
2. Umgekehrt kann der Benutzer auch auf einen Bereich in der Dokumentenvorschau klicken oder diese auf andere Art und Weise auszuwählen, wobei diesem Bereich ein Dateneingabefeld, z. B. ein Texteingabefeld, eines HTML-Formulars zugeordnet ist. In diesem Fall wird ebenfalls der ausgewählte Bereich, wiederum z. B. mit einem farbigen Rechteck, markiert, und, vorzugsweise der Tastatureingabefokus auf das entsprechende Eingabefeld gelenkt, z. B. durch Platzieren eines entsprechenden Eingabe-Cursors in dem Eingabefeld. Gemäß einem weiteren bevorzugten Ausführungsbeispiel kann auf die Markierung verzichtet werden, und statt dessen wird ein Eingabefeld, z. B. ein Texteingabefeld gleich selbst über die Vorschau gelegt, wobei dieses Texteingabefeld nur dann sichtbar ist, wenn der Benutzer vorher in diesem Bereich geklickt hat, andernfalls ist es unsichtbar. So lange das Texteingabefeld unsichtbar ist, sieht man das darunter liegende Vorschaubild. Zwar ist diese Lösung hinsichtlich der Realisierung etwas komplexer, kommt jedoch einem WYSIWYG-Editor, wie z. B. Quarkexpress oder InDesign noch näher (WYSIWYG = What You See Is What You Get).

Nachfolgend werden anhand der beiliegenden Zeichnungen bevorzugte Ausführungsbeispiele der vorliegenden Erfindung näher erläutert. Es zeigen:
- Fig. 1: ein Flussdiagramm des erfindungsgemäßen Verfahrens nach einem bevorzugten Ausführungsbeispiel;
- Fig. 2: eine Übersicht des Computersystems, welches das erfindungsgemäße Verfahren ausführt und die erfindungsgemäße grafische Benutzerschnittstelle bereitstellt;
- Fig. 3A: die erfindungsgemäße grafische Benutzerschnittstelle gemäß einem bevorzugten Ausführungsbeispiel;
- Fig. 3B: die grafische Benutzerschnittstelle aus Fig. 3A, bei der gemäß einem Ausführungsbeispiel ein Datenbereich in dem Dokument in dem Vorschaubereich nach dem Auswählen des zugeordneten HTML-Formularelements hervorgehoben wurde;
- Fig. 3C: die grafische Benutzerschnittstelle aus Fig. 3A, bei der gemäß einem Ausführungsbeispiel ein Datenbereich in dem Dokument in dem Vorschaubereich nach dem Auswählen desselben hervorgehoben wurde und ein Eingabe-Cursor in dem zugeordneten HTML-Formularelement platziert wurde;
- Fig. 3D: die grafische Benutzerschnittstelle aus Fig. 3A, bei der gemäß einem weiteren Ausführungsbeispiel ein Eingabefeld erzeugt wurde, das dem Datenbereich in dem Dokument in dem Vorschaubereich zumindest teilweise überlappt, und
- Fig. 4: ein Bildschirmausdruck eine Implementierung des erfindungsgemäßen Verfahrens und der erfindungsgemäßen grafischen Benutzerschnittstelle.

In der nachfolgenden detaillierten Beschreibung der bevorzugten Ausführungsbeispiele werden gleiche oder ähnlich wirkende Elemente in den Figuren mit gleichen Bezugszeichen versehen.

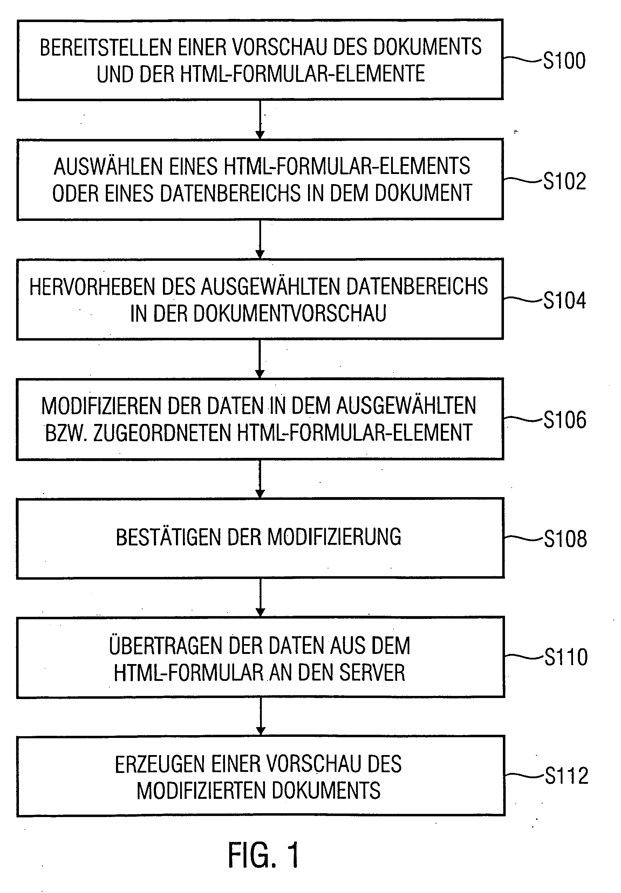

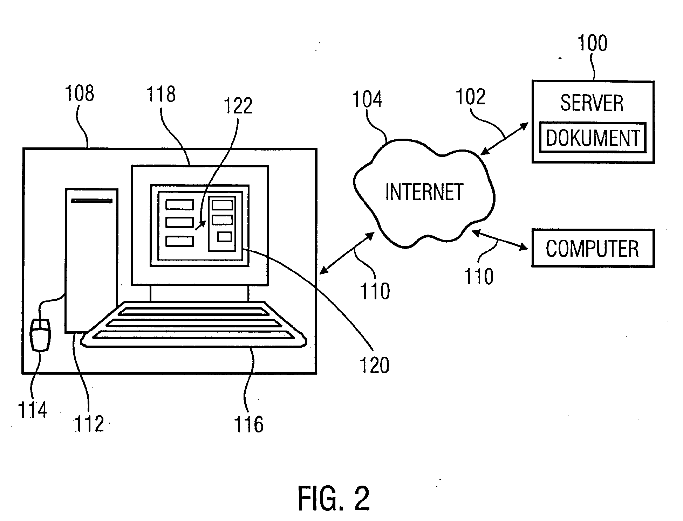

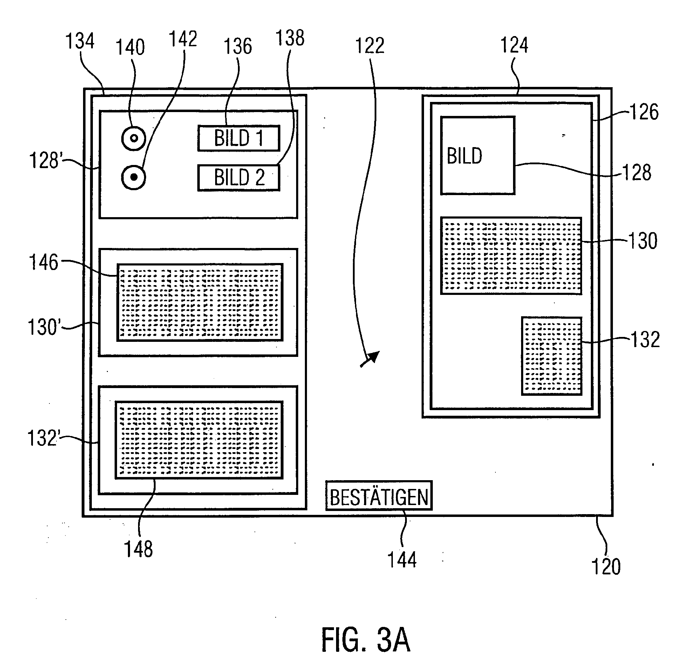

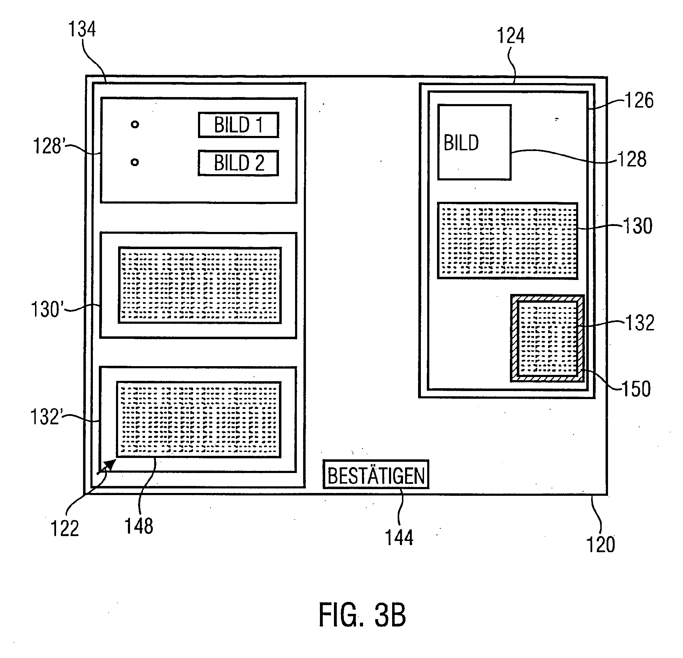

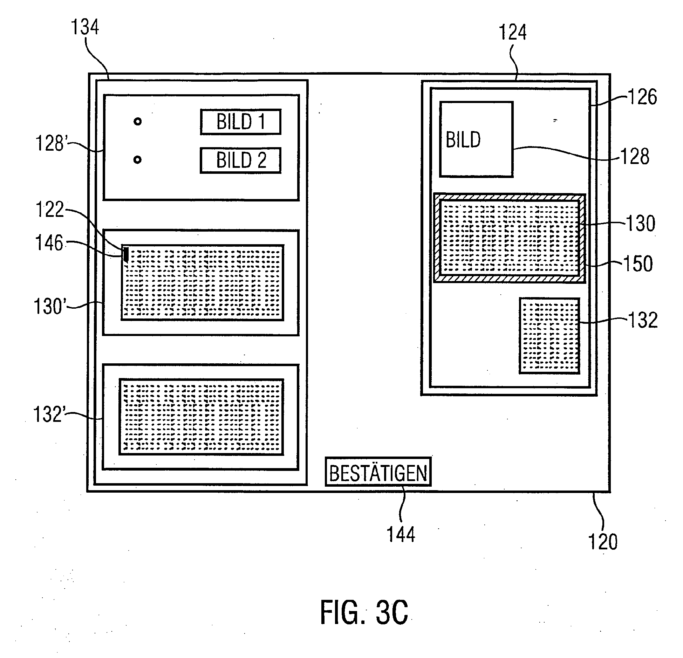

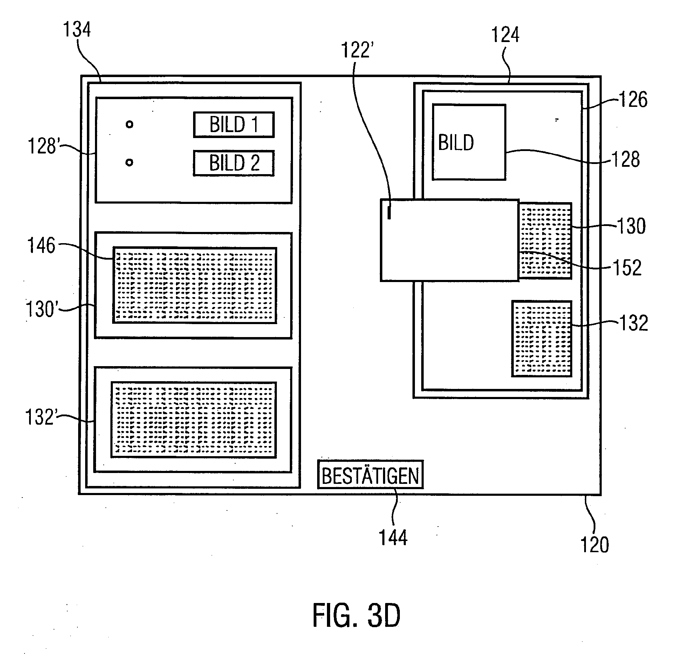

Fig. 1 zeigt ein Flussdiagramm des erfindungsgemäßen Verfahren nach einem bevorzugten Ausführungsbeispiel. In einem ersten Schritt S100 werden auf dem Browser des Benutzers eine Vorschau des Dokuments und die verschiedenen Dokumentbereiche zugeordneten HTML-Formularelemente bereitgestellt. Die Vorschau wird basierend auf den Daten erzeugt, die in den Browser des Benutzers von dem Server, auf dem das Dokument in der aktuellen Version vorliegt, herunter geladen werden. Die HTML-Formularelemente können verschiedenen Datenbereichen in dem Dokument zugeordnet sein, beispielsweise Textbereichen oder Bildern oder anderen Elementen. Ferner definieren die HTML-Formularelemente bestimmte Möglichkeiten der Ausrichtung, Platzierung oder des Stils der verwendete Elemente. Für die nachfolgende Beschreibung sei beispielhaft angenommen, dass das erfindungsgemäße Verfahren dazu dient, bestimmte Textbereiche innerhalb des Dokuments zu modifizieren, wobei die vorliegende Erfindung natürlich nicht auf eine solche Ausgestaltung beschränkt ist, sondern vielmehr auf die Modifizierung auch anderer Bereiche, beispielsweise Bildbereiche und ähnliches, gerichtet sein kann. Auch beschränkt sich die vorliegende Erfindung nicht auf die einfache Modifizierung von Text dadurch, dass neuer Text eingegeben wird, sondern vielmehr können auch die Schriftarten oder andere Stilelemente der verwendeten Texte oder Elemente, sowie deren Anordnung innerhalb des Dokuments über die HTML-Formularelemente geändert werden.

Nachdem die den Textbereichen der Vorschau zugeordneten HTML-Formularelemente sowie die Dokumentenvorschau bereitgestellt wurden, geht das Verfahren zum Schritt S102 über, in dem ein Benutzer des Browsers entweder ein HTML-Formularelement oder einen Datenbereich in dem Dokument in der Vorschau auswählt, den er modifizieren möchte. Um die oben beschriebenen, im Stand der Technik auftretenden Probleme im Zusammenhang mit der richtigen Zuordnung der zu ändernden Daten zu vermeiden, wird, nach dem Auswählen im Schritt S102, erfindungsgemäß im Schritt S104 der ausgewählte Datenbereich in der Dokumentenvorschau hervorgehoben oder eine Hintergrundfarbe eines Eingabebereichs des zugeordneten HTML-Formularelements geändert, beispielsweise durch Hinterlegung mit einer farbigen Ebene, durch Einrahmen, oder durch Überlagern des Datenbereichs mit einem Eingabefeld. Durch dieses Hervorheben wird sicher gestellt, dass der Benutzer des Browsers weiß, welche Datenbereiche innerhalb des Dokuments durch seine Änderung beeinflusst werden. Nachdem der Benutzer überprüft hat, ob der hervorgehobene Datenbereich auch tatsächlich derjenige ist, der zu ändern ist, geht das Verfahren zum Schritt S106 weiter, in dem der Benutzer die Daten modifiziert.

Stellt der Benutzer fest, dass der im Schritt S104 hervorgehobene Datenbereich nicht derjenige ist, der zu modifizieren ist, so geht das Verfahren zum Schritt S102 zurück, in dem der Benutzer eine neue Auswahl trifft.

Nach dem Modifizieren der Daten im Schritt S106 geht das Verfahren zum Schritt S108 über, in dem die Modifizierung durch den Benutzer bestätigt wird, beispielsweise durch Betätigung einer Aktualisierungs-Taste, wobei hier vorgesehen sein kann, dass eine einzige Aktualisierungs-Taste oder Bestätigungs-Taste vorgesehen ist, um die Daten aus allen HTML-Formularelementen an den Server zu übertragen.

Nachdem die Modifizierung bestätigt wurde, erfolgt im Schritt S110 die Übertragung der Daten an den Server, und im Schritt S112 wird basierend auf den modifizierten Dokumentdaten, die von dem Server empfangen werden, eine modifizierte bzw. aktualisierte Vorschau des Dokuments erzeugt, so dass der Benutzer des Browsers ohne weiteres seine Änderungen und deren Auswirkung kontrollieren kann.

Gemäß einem weitern Ausführungsbeispiel kann ferner vorgesehen sein, dass die ursprünglichen Daten gespeichert werden, so dass diese beim Bestätigen der Änderung nicht verloren gehen. Dies ermöglicht es, dass der Benutzer die ursprünglichen Daten wiedergewinnen kann, wenn sich herausstellt, dass die durchgeführten Änderungen, die in der modifizierten Vorschau zu sehen sind, rückgängig gemacht werden sollen.

Fig. 2 zeigt eine Übersicht des Computersystems, welches das erfindungsgemäße Verfahren ausführt und die erfindungsgemäße grafische Benutzerschnittstelle implementiert. In Fig. 2 ist der Server 100 gezeigt, der das zu modifizierende Dokument speichert. Der Server 100 ist über eine geeignete Verbindung 102 mit dem Internet 104 verbunden. Alternativ kann anstelle des Internets auch eine anders geartete Netzwerk-Verbindung vorgesehen sein, wie z. B. ein LAN, ein WAN oder ähnliches. Mit dem Internet 104 sind mehrere Computer 106 verbunden, wobei aus Gründen der Übersichtlichkeit lediglich ein Computer 106 gezeigt ist. Dieser Computer dient dazu, das auf dem Server 100 gespeicherte Dokument herunter zu laden und einem Benutzer des Computers 106 über einen Browser zur Ansicht bereitzustellen. Ferner ist eine Computeranordnung 108 vorgesehen, die ebenfalls über eine geeignete Verbindung 110 mit dem Internet 104 verbunden ist. Die Computeranordnung 108 stellt, in Verbindung mit dem Internet 104 und dem Server 100 das Computersystem dar, welches das erfindungsgemäße Verfahren und die erfindungsgemäße grafische Benutzerschnittstelle sowie deren Funktionalität implementieren. Die Computeranordnung 108 umfasst einen Computer 112, auf dem ebenfalls ein Browser läuft, mit dem eine Maus 114, eine Tastatur 116 sowie ein Bildschirm 118 verbunden ist. Der auf dem Computer 112 laufende Browser führt das erfindungsgemäße Verfahren durch und stellt auf dem Bildschirm 118 die dort schematisch gezeigte grafische Benutzerschnittstelle 120 dar, wobei der Benutzer der Computeranordnung 108 auf herkömmliche Art und Weise mittels eines Mauszeigers 122 verschiedene Bereiche der angezeigten grafischen Benutzerschnittstelle auswählen kann. Der Computer 112 stellt somit in Zusammenwirkung mit der Maus 114 und der grafischen Benutzerschnittstelle 120 auf dem Bildschirm 118 eine Steuerungseinrichtung der grafischen Benutzerschnittstelle dar.

Will ein Benutzer das auf dem Server 100 gespeicherte Dokument aktualisieren, so wird eine Vorschau desselben auf die Computeranordnung 108 herunter geladen, und auf die oben beschriebene Art und Weise modifiziert.

Bevor nachfolgend bevorzugte Ausführungsbeispiele näher erläutert werden, sei die Funktionsweise der besonderen Hervorhebung bestimmter Datenbereiche, zur vereinfachten Mensch-Maschine-Kommunikation, auf Grundlage von HTML- und JavaScript-Funktionalitäten näher erläutert.

### Grundlegend sind fünf Elemente an diesem Verfahren beteiligt:

- die HTML-Formularfelder zur Dateneingabe,
- das aus den Benutzereingaben dynamisch generierte Vorschaubild,
- die HTML-ImageMap, welche eine divergierte Linksetzung über einem Bild erst ermöglicht,
- die DIV-Auszeichnungselemente, welche die roten Rahmen erzeugen, sowie
- das übergeordnete JavaScript, das alle Bausteine logisch miteinander verknüpft.

Die Zielsetzung des erfindungsgemäßen Konzeptes besteht darin, dem Anwender eine einfache visuelle Verbindung zwischen dem HTML-Formular und dem Vorschaubild zu ermöglichen. Die Funktionalität ist hierbei wie folgt:
Wählt der Benutzer ein bestimmtes Feld des Formulars aus, wird im Bild der dazugehörige Bereich durch einen roten Rahmen markiert. Verlässt er das aktuelle Formularfeld, verschwindet der Rahmen wieder. Diese unterstützende Visualisierung besteht aber auch in die andere Richtung. Bewegt sich der Mauszeiger über das Bild, so wird bei jedem "einfahren" in einen sensiblen Bereich, die Hintergrundfarbe des dazugehörigen Eingabeelements verändert und beim "Hinausfahren" wieder zurückgesetzt. Zusätzlich besteht die Möglichkeit einen Bereich des Bildes mit einem Klick auszuwählen. Geschieht dies, verändert sich nicht nur die Hintergrundfarbe des aktuellen Formularelements, sondern der Texteingabecursor wird in dieses Element gesetzt. Dieser Zustand bleibt solange, erhalten, bis ein anderer Bild- oder Formularbereich durch einen Klick ausgewählt wurde, da immer nur ein Bereich zu einer Zeit editiert werden kann. Das Überfahren der anderen Bereiche mit dem Mauszeiger ist aber dennoch möglich.

Die Startvoraussetzungen, unmittelbar nach dem Aufbau der Seite, setzen sich wie folgt zusammen:
Jedes Eingabefeld des HTML-Formulars besitzt eine eindeutige Bezeichnung - die "ID". Das Vorschaubild ist sichtbar, darüber liegt unsichtbar eine ImageMap, welche die sensiblen Datenbereiche mit einem Link überlagert. Ebenfalls unsichtbar, aber dennoch vorhanden, sind die roten Rahmen, welche später die Datenbereiche kennzeichnen sollen.

Damit eine exakte Verbindung zwischen Eingabefeld und Rahmen entsteht, erhält jeder Rahmen ebenfalls eine eindeutige Identifizierung, welche an die ID des dazugehörigen Feldes angelehnt ist. Beispiel: ist die Feld-ID "42" so ist die Rahmen-ID "caret:42".

Jede Aktion, die ein Benutzer innerhalb eines Web-Browsers ausführt, kann über so genannte "Events" mittels JavaScript überwacht, beeinflusst und weiterverarbeitet werden.

### Folgende "Ereignisse" finden Verwendung:

- onFocus: Ein bestimmtes Element wird ausgewählt
- onBlur: ein bestimmtes Element wird verlassen ("abgewählt")
- onMouseover: der Mauszeiger bewegt sich in den Gültigkeitsbereich eines Elements hinein
- onMouseout: der Mauszeiger bewegt sich aus dem Gültigkeitsbereich eines Elements hinaus
- onClick: eine Maustaste wird innerhalb des Gültigkeitsbereiches eines Elements gedrückt.

Anhand der Fig. 3 werden nachfolgend Ausführungsbeispiele der erfindungsgemäßen grafischen Benutzerschnittstelle beschrieben. Fig. 3A zeigt die erfindungsgemäße grafische Benutzerschnittstelle 120 gemäß einem bevorzugten Ausführungsbeispiel. Die grafische Benutzerschnittstelle 120 umfasst einen Vorschaubereich 124, in dem eine Vorschau 126 des auf dem Server 100 gespeicherten Dokuments angezeigt ist. Bei dem dargestellten Ausführungsbeispiel umfasst die Dokumentenvorschau 126 ein Dokument mit drei Elementen, nämlich einem Bildelement 128, einem ersten Textelement 130 sowie einem zweiten Textelement 132.

Die grafische Benutzerschnittstelle 120 umfasst ferner einen Formularbereich 134, in dem ein HTML-Formular mit drei HTML-Formularelementen angeordnet ist, die den entsprechenden Elementen 128-132 zugeordnet sind. Hierbei handelt es sich um das HTML-Formularelement 128', welches dem Bildelement 128 in dem Dokument zugeordnet ist. Ferner ist das HTML-Formularelement 130' und das HTML-Formularelement 132' vorgesehen, die dem ersten Textelement 130 bzw. dem zweiten Textelement 132 des Dokuments zugeordnet sind.

Das HTML-Formularelement 128' umfasst bei dem dargestellten Ausführungsbeispiel zwei Bildbereiche 136, 138, die über zugeordnete Button 140 bzw. 142 ausgewählt werden können. Wie in Fig. 3A gezeigt ist, ist hier der Button 142 betätigt, so dass das Bild 138 (Bild 2) ausgewählt ist, und das in dem Bildbereich 138 wiedergegebene Bild entspricht Bild 2 in dem Bildelement 128 des Dokuments. Der Benutzer der grafischen Benutzerschnittstelle kann durch Betätigen des Buttons 140 nun das Bild 1 in dem ersten Bildbereich 136 auswählen, so dass nach einer Betätigung der Bestätigungstaste 144 die entsprechenden Informationen an den Server 100 übertragen werden, dort das Dokument aktualisiert wird und dann eine aktualisierte Dokumentenvorschau 126 erzeugt wird, in der dann anstelle von Bild 2, welches in dem Bildbereich 138 gespeichert ist, Bild 1 gemäß dem Bildbereich 136 des HTML-Formularelements 128' zu sehen ist. Die HTML-Formularelemente 130' und 132' umfassen jeweils ein Texteingabefeld 146 bzw. 148, in dem sich der Text befindet, der in der Dokumentenvorschau in den Textelementen 130 bzw. 132 angegeben ist. Durch Ändern des Textes in den entsprechenden Texteingabefeldern 146 bzw. 148 kann eine entsprechende Änderung der Wiedergabe des Textes in den Textelementen 130 und 132 des Dokuments auf die oben beschriebene Art und Weise erreicht werden.

Obwohl das in Fig. 3A beschriebene Ausführungsbeispiel lediglich eine Bestätigungstaste 144 umfasst, können statt dessen auch mehrere Bestätigungstasten vorgesehen sein, beispielsweise eine für jedes HTML-Formularelement. Ferner ermöglicht es dem Benutzer die Zwischenergebnisse seiner Modifizierung zu überprüfen, er also nicht darauf warten muss, alle Modifizierungen durchzuführen, die dann abschließend durch das Betätigen eines Bestätigungsknopfes übernommen werden.

Für die nachfolgende Betrachtung sei angenommen, dass die HTML-Formularelemente 130' und 132' jeweils ein Texteingabefeld 146 bzw. 148 umfassen, wobei dem Eingabefeld 146 die Feld-ID "42" und dem Eingabefeld 148 die Feld-ID "50" zugeordnet ist. Daraus ergeben sich zwei anfangs unsichtbare Rahmen mit den ID's "caret:42" sowie "caret:50" und ebenfalls zwei "sensitive klickbare Bereiche", welche durch die HTML-ImageMap ermöglicht werden, die dem ersten Textelement 130 bzw. dem zweiten Textelement 132 zugeordnet sind.

Zunächst erfolgt eine nähere Betrachtung der Situation, in der der Mauszeiger durch den Benutzer über das Bild bewegt wird, ohne zu klicken.
- Bewegt sich der Mauszeiger über das Textelement 130, also in den Geltungsbereich des Rahmens von "caret:42" hinein, so wird der onMouseover-Event auf "caret:42" ausgelöst. Anschließend wird die JavaScript-Funktion show("42") aufgerufen, die den Rahmen "caret:42" einblendet. Gleichzeitig wird die Hintergrundfarbe des Eingabefelds 146 mit der Feld-ID "42" hervorgehoben.
- Bewegt sich der Mauszeiger sich aus dem Geltungsbereich von "caret:42" hinaus - verlässt der Mauszeiger also das Textelement 130, so wir der onMouseout-Event auf "caret:42" ausgelöst. Anschließend wird die JavaScript-Funktion hide ("42") aufgerufen, die den Rahmen "caret:42" ausblendet. Gleichzeitig wird die Hintergrundfarbe des Eingabefelds 146 mit der Feld-ID "42" wieder zurückgesetzt.
- Bewegt sich der Mauszeiger über das Textelement 132, also in den Geltungsbereich des Rahmens von "caret:50" hinein, so wird der onMouseover-Event auf "caret:50" ausgelöst. Anschließend wird die JavaScript-Funktion show("50") aufgerufen, die den Rahmen "caret:50" einblendet. Gleichzeitig wird die Hintergrundfarbe des Eingabefelds 148 mit der Feld-ID "50" hervorgehoben.
- Bewegt sich der Mauszeiger sich aus dem Geltungsbereich von "caret:50" hinaus - verlässt der Mauszeiger also das Textelement 132, so wir der onMouseout-Event auf "caret:50" ausgelöst. Anschließend wird die JavaScript-Funktion hide("50") aufgerufen, die den Rahmen "caret:50" ausblendet. Gleichzeitig wird die Hintergrundfarbe des Eingabefelds 148 mit der Feld-ID "50" wieder zurückgesetzt.
   Fig. 3B zeigt die grafische Benutzerschnittstelle 120 aus Fig. 3A, bei der das HTML-Formularelement 132' durch Bewegen des Mauszeigers 122 an die gezeigte Stelle und Klicken der Maus ausgewählt wurde. Erfindungsgemäß hat dies zur Folge, dass der dem HTML-Formularelement 132' zugeordnete Datenbereich der Dokumentenvorschau 126, nämlich der Bereich, welcher das zweite Textelement 132 enthält, hervorgehoben wird, bei dem beschriebenen Ausführungsbeispiel durch die Erzeugung einer Umrandung 150. Der Rahmen 150 kann eine beliebige Form und Farbe haben, und dient lediglich dazu, dem Benutzer anzuzeigen, dass durch eine Änderung in dem Textfeld 148 des HTML-Formularelements 132' eine Änderung des zweiten Textelements 132 in dem Dokument durchgeführt wird. Nachfolgend sei ein Beispiel betrachtet, bei dem der Benutzer zuerst in das Eingabefeld 146 mit der Feld-ID "42" klickt und anschließend in das Eingabefeld 148 mit der Feld-ID "50".
- Nach der Auswahl des Eingabefelds 146 mit der Feld-ID "42" wird der onFocus-Event bzgl. des Eingabefelds 146 mit der Feld-ID "42" ausgelöst. Anschließend wird die JavaScript-Funktion show ("42") aufgerufen, die den Rahmen "caret:42" einblendet. Gleichzeitig wird die Hintergrundfarbe des Eingabefelds 146 mit der Feld-ID "42" hervorgehoben.
- Wird nun anschließend das Eingabefelds 148 mit der Feld-ID "50" ausgewählt, so wird der onBlur-Event bzgl. des Eingabefelds 146 mit der Feld-ID "42" ausgelöst wird. Anschließend wird die JavaScript-Funktion hide("42") ausgelöst, die den Rahmen "caret:42" ausblendet. Gleichzeitig wird die Hintergrundfarbe des Eingabefelds 146 mit der Feld-ID "42" wieder zurückgesetzt. Dann wird der onFocus-Event bzgl. des Eingabefelds 148 mit der Feld-ID "50" ausgelöst und die JavaScript-Funktion show("50") wird aufgerufen, die den Rahmen "caret:50" einblendet. Gleichzeitig wird die Hintergrundfarbe des Eingabefelds 148 mit der Feld-ID "50" hervorgehoben.
   Fig. 3C zeigt ein weiteres Ausführungsbeispiel der erfindungsgemäßen grafischen Benutzerschnittstelle, gemäß der der Datenbereich betreffend das erste Textelement 130 in der Dokumentenvorschau 126 ausgewählt wurde, in dem der Mauszeiger über das erste Textelement 130 bewegt wurde und anschließend durch den Benutzer geklickt wurde. Dies führt dazu, dass der ausgewählte Datenbereich, ähnlich wie in Fig. 3B, durch einen Rahmen 150 hervorgehoben wird, und vorzugsweise wird gleichzeitig der Texteingabecursor 122' in das Texteingabefeld 146 des zugeordneten HTML-Formularelements 130' versetzt. Hierdurch erkennt der Benutzer nicht nur welchen Datenbereich in dem Dokument er ändern wird, sondern er wird auch gleichzeitig zum zugeordneten und richtigen Texteingabefeld 146 geführt. Nachfolgend sei ein Beispiel betrachtet, bei dem der Benutzer den Mauszeiger zuerst über das Bild bewegt und dann das Textelement 130, dem der Rahmen mit der Rahmen-ID "caret:42" zugeordnet ist, auswählt (anklickt), um anschließend das Textelement 132, dem der Rahmen mit der Rahmen-ID "caret:50" zugeordnet ist, auszuwählen (anzuklicken).
- Wenn sich der Mauszeiger in den Geltungsbereich des Rahmens mit der Rahmen-ID "caret:42" hineinbewegt, wird der onMouseover-Event bzgl. des Rahmens mit der Rahmen-ID "caret:42" ausgelöst. Anschließend wird die JavaScript-Funktion show("42") aufgerufen, die den Rahmen mit der Rahmen-ID "caret:42" einblendet. Gleichzeitig wird die Hintergrundfarbe des Eingabefelds 148 mit der Feld-ID "42" hervorgehoben. Wird nun geklickt, so wird der onClick-Event bzgl. des Rahmens mit der Rahmen-ID "caret:42" ausgelöst und die JavaScript-Variable "markedID" erhält den Wert "42".
- Bewegt sich der Mauszeiger aus dem Geltungsbereich des Rahmens mit der Rahmen-ID "caret:42" hinaus, wird der onMouseout-Event bzgl. des Rahmens mit der Rahmen-ID "caret:42" ausgelöst. Der Rahmen mit der Rahmen-ID "caret:42" wird nicht ausgeblendet, da die Variable "markedID" den Wert "42" enthält. Ebenso bleibt die hervorgehobene Hintergrundfarbe des Eingabefelds 148 mit der Feld-ID "42" erhalten.
- Bewegt sich der Mauszeiger jetzt in den Geltungsbereich des Rahmens mit der Rahmen-ID "caret:50" hinein, wird der onMouseover-Event bzgl. des Rahmens mit der Rahmen-ID "caret:50" ausgelöst. Anschließend wird die JavaScript-Funktion show("50") aufgerufen, was den Rahmen mit der Rahmen-ID "caret:50" einblendet. Gleichzeitig wird die Hintergrundfarbe des Eingabefelds 148 mit der Feld-ID "50" hervorgehoben. Wird nun geklickt, so wird das onClick-Event bzgl. des Rahmens mit der Rahmen-ID "caret:50" ausgelöst und die JavaScript-Variable "markedID" erhält den Wert "50". Anschließend wird die JavaScript-Funktion hide("42") aufgerufen, was den Rahmen mit der Rahmen-ID "caret:42" ausblendet. Gleichzeitig wird die Hintergrundfarbe des Eingabefelds 148 mit der Feld-ID "42" wieder zurückgesetzt.
- Bewegt sich der Mauszeiger dann wieder aus dem Geltungsbereich des Rahmens mit der Rahmen-ID "caret:50" hinaus, wird der onMouseout-Event bzgl. des Rahmens mit der Rahmen-ID "caret:50" ausgelöst. Der Rahmen mit der Rahmen-ID "caret:50" wird nicht ausgeblendet, da die Variable "markedID" den Wert "50" enthält. Ebenso bleibt die hervorgehobene Hintergrundfarbe des Eingabefelds 148 mit der Feld-ID "50" erhalten.

Fig. 3D zeigt wiederum ein weiteres bevorzugtes Ausführungsbeispiel der erfindungsgemäßen grafischen Benutzerschnittstelle, bei dem, ähnlich wie in Fig. 3C, durch Bewegen des Mauszeigers über den Datenbereich, der dem ersten Textelement 130 in der Dokumentenvorschau 126 zugeordnet ist und Klicken dieser Datenbereich ausgewählt wurde. Anders als bei den in dem vorhergehenden beschriebenen Ausführungsbeispielen wird nun kein Rahmen oder ähnliches erzeugt, sondern vielmehr wird ein weiteres Eingabefeld 152 erzeugt, das derart angeordnet ist, dass dieses den ausgewählten Datenbereich in der Dokumentenvorschau entweder teilweise oder vollständig überdeckt. Gleichzeitig wird, vorzugsweise, der Eingabecursor 122' in dem Eingabefeld 152 angeordnet. Die in das Eingabefeld 130 eingegebenen Daten werden nach Abschluss der Dateneingabe in das zugehörige HTML-Formularelement 130' übernommen, und erscheinen dort in dem Textfeld 146.

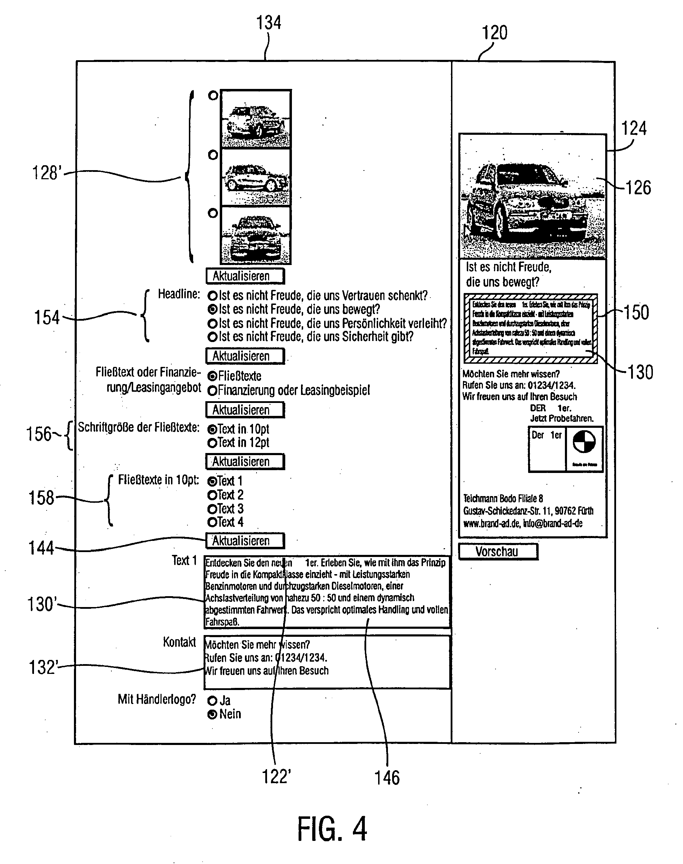

Fig. 4 zeigt ein Beispiel für eine tatsächliche Implementierung der vorliegenden Erfindung zur Modifikation eines Dokuments. Die Dokumentenvorschau 124 zeigt hier ein Dokument, welches ein Werbedokument für einen Automobil-Händler wieder gibt, welches verschiedene Bereiche umfasst, denen, ähnlich wie es oben beschrieben wurde, verschiedene HTML-Formularelemente zugeordnet sind. Zusätzlich zu den beschriebenen HTML-Formularelementen betreffend Bilder und Texte umfasst die in Fig. 4 gezeigte Implementierung weitere Ausführungsbeispiele für HTML-Formularelemente, die eine Modifikation des Dokuments 124 ermöglichen. Beispielhaft ist das HTML-Formularelement 154 gezeigt, bei dem, anders als bei den oben beschriebenen Elementen 130' und 132' keine Texteingabefelder vorgesehen sind, sondern vielmehr vier verschiedene, vorgegebene Texte dargestellt sind, die als Überschrift ausgewählt werden können. Die HTML-Formularelemente 156 und 158 beschreiben Formatierungsanweisungen, die für die verschiedenen Texte in dem Dokument ausgewählt werden können.

Bei dem in Fig. 4 gezeigten Beispiel wurde wiederum das Textelement 130 ausgewählt, und ist daher mit dem Rahmen 150 hervorgehoben, wobei gleichzeitig der Eingabecursor 122' in dem Textfeld 146 des HTML-Formularelements 130' angeordnet ist, so dass ein Benutzer erkennt, dass durch Änderung des Textes in diesem Feld eine entsprechende Änderung in dem Bereich 130 des Dokuments erfolgt.

Abhängig von den Gegebenheiten kann das erfindungsgemäße Verfahren in Hardware oder in Software implementiert werden. Die Implementierung kann auf einem digitalen Speichermedium, insbesondere einer Diskette, einer CD oder einer DVD, mit elektronisch auslesbaren Steuersignalen erfolgen, die so mit dem anhand der Fig. 2 beschriebenen Computersystem zusammen wirken können, dass das erfindungsgemäße Verfahren ausgeführt wird. Allgemein besteht die Erfindung somit auch in einem Computer-Programm-Produkt mit auf einem maschinenlesbaren Träger gespeichertem Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer, wie er beispielsweise anhand der Fig. 2 beschrieben ist, abläuft.

## Patentansprüche

1. Verfahren zum Modifizieren eines Dokuments, das durch einen Server (100) basierend auf Daten aufgebaut wird, die von einem Benutzer an den Server (100) übertragen werden, mit folgenden Schritten:
Bereitstellen (S100) einer Vorschau (126) des Dokuments in einem Vorschaubereich (124) einer grafischen Benutzerschnittstelle (120);
Bereitstellen (S100) eines HTML-Formulars mit einer Mehrzahl von HTML-Formularelementen (128', 130', 132') in einem Formularbereich (134) der grafischen Benutzerschnittstelle (120), wobei jedes HTML-Formularelement (128', 130', 132') Daten enthält, die einem vorbestimmten Bereich (128, 130, 132) des Dokuments zugeordnet sind;
Auswählen (S102) eines HTML-Formularelements (128', 130', 132') oder eines Datenbereichs (128, 130, 132) in dem Dokument in dem Vorschaubereich (124);
ansprechend auf das Auswählen des HTML-Formularelements (128', 130', 132') bzw. des Datenbereichs (128, 130, 132), Hervorheben (S104) des dem HTML-Formularelement zugeordneten Datenbereichs des Dokuments in dem Vorschaubereich (124) bzw. des dem Datenbereich des Dokuments in dem Vorschaubereich (124) zugeordneten HTML-Formularelements; und
Modifizieren (S106) der Daten in dem dem Datenbereich zugeordneten HTML-Formularelement.

2. Verfahren nach Anspruch 1, bei dem der Schritt des Hervorhebens das Erzeugen eines Rahmens (150) um den zugeordneten Datenbereich (130, 132) in der Vorschau (126) bzw. dass Ändern einer Hintergrundfarbe eines Eingabebereichs des zugeordneten HTML-Formularelements umfasst.

3. Verfahren nach Anspruch 2, bei dem der Schritt des Hervorhebens ferner folgenden Schritt umfasst,:
Platzieren einer Eingabemarkierung (122') in dem zugeordneten HTML-Formularelement (130').

4. Verfahren nach Anspruch 1, bei dem der Schritt des Hervorhebens das Erzeugen eines Eingabefeldes (152) umfasst, wobei das Eingabefeld (152) den zugeordneten Datenbereich (130) bzw. den ausgewählten Datenbereich (130) des Dokuments in dem Vorschaubereich (142) zumindest teilweise überlagert.

5. Verfahren nach Anspruch 4, bei dem der Schritt des Hervorhebens ferner das Platzieren einer Eingabemarkierung (122') in dem Eingabefeld (152) umfasst.

6. Verfahren nach Anspruch 4 oder 5, bei dem der Schritt des Modifizierens das Eingeben von Daten in das Eingabefeld (152) und das Übertragen der in das Eingabefeld (152) eingegebenen Daten in das zugeordnete HTML-Formularelement (130') umfasst.

7. Verfahren nach einem der Ansprüche 1 bis 6, mit folgenden Schritten:
Bestätigen (S108) der durchgeführten Modifizierung der Daten;
Übertragen (S110) der Daten aus dem HTML-Formular (128', 130', 132') an den Server (100), um das Dokument basierend auf den modifizierten Daten aufzubauen, um eine aktualisierte Version des Dokuments zu erhalten; und
Erzeugen (S112) einer Vorschau des aktualisierten Dokuments in dem Vorschaubereich (124).

8. Computer-Programm-Produkt mit auf einem maschinenlesbaren Träger gespeichertem Programmcode zur Durchführung des Verfahrens nach einem der Ansprüche 1 bis 7, wenn das Programm-Produkt auf einem Rechner abläuft.

9. Computer-Programm mit einem Programmcode zur Durchführung des Verfahrens nach einem der Ansprüche 1 bis 7, wenn das Programm auf einem Computer abläuft.

10. Digitales Speichermedium mit elektronisch auslesbaren Steuersignalen, die so mit einem programmierbaren Computersystem zusammenwirken können, dass ein Verfahren nach einem der Ansprüche 1 bis 7 ausgeführt wird.

11. Grafische Benutzerschnittstelle (120) zum Modifizieren eines Dokuments, das durch einen Server (100) basierend auf Daten aufgebaut wird, die von einem Benutzer an den Server (100) übertragen werden, mit folgenden Merkmalen:
einem Vorschaubereich (124), in dem basierend auf Daten betreffend das Dokument von dem Server (100) eine Vorschau (126) des Dokuments vorliegt;
einem Formularbereich (134), der ein HTML-Formular mit einer Mehrzahl von HTML-Formularelementen (128', 130', 132') aufweist, wobei jedes HTML-Formularelement (128', 130', 132') Daten enthält, die einem Bereich (128, 130, 132) des Dokuments in dem Vorschaubereich (124) zugeordnet sind, wobei die in den HTML-Formularelementen enthaltenen Daten durch einen Benutzer geändert werden können;
einer Steuerungseinrichtung (112), die wirksam ist, um beim Auswählen eines HTML-Formularelements (128', 130', 132') oder eines Datenbereichs (128, 130, 132) in dem Dokument in dem Vorschaubereich (124) den zugeordneten Datenbereich (128, 130, 132) in dem Vorschaubereich (124) oder das zugeordnete HTML-Formularelement hervorzuheben; und
einem Bestätigungsbereich (144), dessen Betätigung bewirkt, dass die Steuerungseinrichtung (112) die Daten aus dem HTML-Formular an den Server (100) überträgt und ein aktualisiertes Dokument von dem Server (100) empfängt, um in dem Vorschaubereich (124) eine aktualisierte Vorschau des Dokuments zu erzeugen.

12. Grafische Benutzerschnittstelle (120) nach Anspruch 11, bei der die Steuerungseinrichtung (112) wirksam ist, um einen Rahmen (150) um den zugeordneten Datenbereich (130, 132) in der Vorschau (126) zu erzeugen bzw. eine Hintergrundfarbe eines Eingabebereichs des zugeordneten HTML-Formularelements zu ändern, um denselben hervorzuheben.

13. Grafische Benutzerschnittstelle (120) nach Anspruch 12, bei der die Steuerungseinrichtung (112) wirksam ist, um eine Eingabemarkierung (122') in dem zugeordneten HTML-Formularelement (132') zu platzieren.

14. Grafische Benutzerschnittstelle nach Anspruch 11, bei der die Steuerungseinrichtung (112) wirksam ist, um ein Eingabefeld (152) zu erzeugen, das dem zugeordneten Datenbereich (132) bzw. dem ausgewählten Datenbereich (132) in dem Vorschaubereich (124) zumindest teilweise überlagert ist.

15. Grafische Benutzerschnittstelle (120) nach Anspruch 14, bei der die Steuerungseinrichtung (112) ferner wirksam ist, um eine Eingabemarkierung (122') in dem Eingabefeld (152) zu platzieren.

16. Grafische Benutzerschnittstelle (120) nach Anspruch 14 oder 15, bei der die Steuerungseinrichtung (112) wirksam ist, um die in das Eingabefeld (152) eingegebenen Daten in das zugeordnete HTML-Formularelement (130') zu übertragen.
